(19) Europäisches Patentamt
European Patent Office
Office européen des brevets

(11) **EP 3 889 881 B1**

## (12) EUROPEAN PATENT SPECIFICATION

(45) Date of publication and mention
of the grant of the patent:
**08.05.2024 Bulletin 2024/19**

(21) Application number: **20166625.2**

(22) Date of filing: **30.03.2020**

(51) International Patent Classification (IPC):
***G06T 5/00*** *(2024.01)*      ***G06T 5/20*** *(2006.01)*

(52) Cooperative Patent Classification (CPC):
**G06T 5/70; G06T 5/20; G06T 5/60;**
G06T 2207/10072; G06T 2207/20081;
G06T 2207/20084

## (54) METHOD, DEVICE AND SYSTEM FOR GENERATING A DENOISED MEDICAL IMAGE

VERFAHREN, VORRICHTUNG UND SYSTEM ZUR ERZEUGUNG EINES ENTRAUSCHTEN MEDIZINISCHEN BILDES

PROCÉDÉ, DISPOSITIF ET SYSTÈME POUR GÉNÉRER UNE IMAGE MÉDICALE DÉBRUITÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.10.2021 Bulletin 2021/40**

(73) Proprietor: **Siemens Healthineers AG
91301 Forchheim (DE)**

(72) Inventor: **KUMAR, Thanuja
560010 Bangalore, Karnataka (IN)**

(74) Representative: **Horn Kleimann Waitzhofer
Schmid-Dreyer
Patent- und Rechtsanwälte PartG mbB
Theresienhöhe 12
80339 München (DE)**

(56) References cited:
**WO-A1-2017/191643      US-A1- 2019 377 978**

• **ANWAR SAEED ET AL: "Category-Specific
Object Image Denoising", IEEE TRANSACTIONS
ON IMAGE PROCESSING, IEEE SERVICE
CENTER, PISCATAWAY, NJ, US, vol. 26, no. 11,
1 November 2017 (2017-11-01), pages 5506-5518,
XP011659815, ISSN: 1057-7149, DOI:
10.1109/TIP.2017.2733739 [retrieved on
2017-08-31]**

**Description**

The present invention relates to a method, device and system for processing medical images. In particular, the invention relates to a method, device and system for generating a denoised medical image.

WO 2017/191643 A1 discloses a method of providing a medical image of a region of interest (ROI) of a patient, the method comprising: acquiring a first medical image of a ROI, the medical image characterized by a first signal to noise ratio (SNR); determining for a given pixel in the first image a plurality of different first image patches in the first image, each having a pixel that is coincident with the given pixel; determining for each first image patch a similar second image patch having a second SNR greater than the first SNR; determining an enhanced pixel value for the given pixel having an enhanced SNR greater than the first SNR responsive to pixel values of pixels in the determined second image patches; and using the determined pixel value to generate a second medical image of the ROI having an enhanced SNR greater than the first SNR.

US 2019/377978 A1 discloses an image enhancement process for medical diagnostic ultrasound. Knowledge-based detection of anatomy or artifact identifies locations to be enhanced. The knowledge-based detection of the locations may avoid identification of other anatomy or artifacts. The image enhancement is applied to the identified locations and not others.

Accurate image acquisition using medical imaging devices is essential for effective diagnosis and prognosis of medical conditions that a patient may be suffering from. The image acquisition process, for example, magnetic resonance imaging may sometimes require patients to remain steady and motionless for long durations. This may be difficult for the patient, particularly if the patient is in pain or is young. Medical images are often deteriorated due to presence of noise that may be included in the medical image during the image acquisition process or image reconstruction process. This may be due to disorientation of the patient inside the medical acquisition device or system such as magnetic resonance imaging systems or computed tomography devices. Such noise may degrade the quality of the acquired medical images and cause blurring of one or more features in the medical images. This may require the patient to undergo the image acquisition process again. Therefore, there also exists a risk of increased dosage of radiation to the patient. Removal of noise or denoising of medical images is essential so as to ensure precise and timely diagnosis of medical conditions in the patient.

Currently, if the acquired medical image includes noise beyond a threshold, the patients may be advised to undergo a re-scan or an image acquisition with higher radiation dose. Alternatively, the patients may also be suggested to acquire medical images using a different medical imaging modality. Exposure to radiation for long durations may be detrimental to health of the patient. Additionally, multiple image acquisition processes may cause undue delay in providing necessary medical support to the patient in cases of emergency.

The object of the invention is therefore to provide a method, device and system that enables accurate removal of noise from a medical image and eliminates the need for the patient to undergo multiple image acquisition processes.

The invention achieves the object by a method of generating a denoised medical image as claimed in claim 1, device as claimed in claim 5, a system as claimed in claim 6, a computer program product as claimed in claim 7 and a computer readable medium as claimed in claim 8.

The present invention is further described hereinafter with reference to illustrated embodiments shown in the accompanying drawings, in which:

FIG 1     illustrates a block diagram of a data processing system in which an embodiment for generating a denoised medical image can be implemented.

FIG 2     illustrates a flowchart of a method of generating a denoised medical image, according to an embodiment.

FIG 3     illustrates a flowchart of a method of processing a medical image to obtain pixel information, according to an embodiment.

FIG 4     illustrates a medical image n which a plurality of pixel matrices are constructed, according to an embodiment.

FIG 5     illustrates pixel information associated with a set of medical images, according to an embodiment.

FIG 6     illustrates a flowchart of a method of training a machine learning model to generate a denoised medical image, according to an embodiment.

FIG 7     illustrates a flowchart of a method of retrieving the pre-defined pixel matrix from a database, according to an embodiment.

FIG 8     illustrates a flowchart of a method of generating a pre-defined pixel matrix for a medical image, according to an embodiment.

FIG 9     illustrates a table depicting archived pre-defined pixel matrices associated with at least one category of medical information, according to the embodiment.

FIG 10     illustrates a set of medical images depicting a noisy medical image and a denoised medical image, according to the embodiment.

FIG 11     illustrates a working of the machine learning model for processing the medical images, according to an embodiment.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

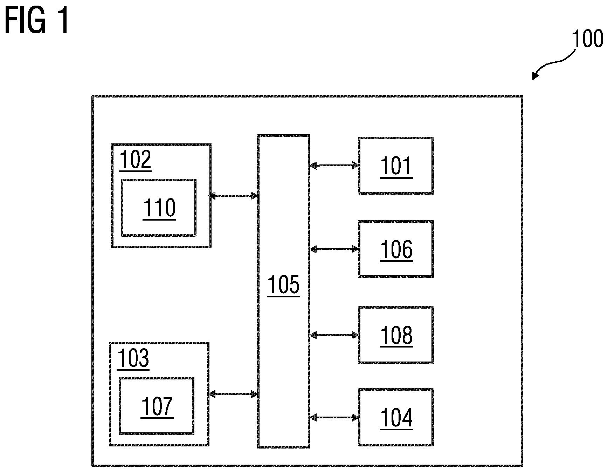

FIG 1 is a block diagram of a data processing system 100 in which an embodiment can be implemented, for example, as a system 100 for generating a denoised medical image, configured to perform the processes as described therein. In FIG 1, said data processing system 100 comprises a processing unit 101, a memory 102, a storage unit 103, an input unit 104, an output unit 106, a bus 105, and a network interface 108.

The processing unit 101, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 101 may also include embedded controllers, such as generic or programmable logic devices or arrays, application specific integrated circuits, single-chip computers, and the like.

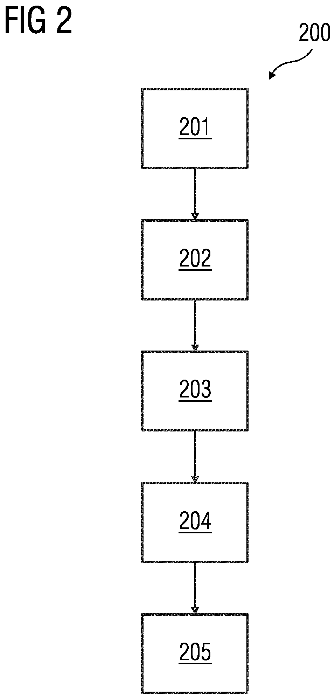

The memory 102 may be volatile memory and non-volatile memory. The memory 102 may be coupled for communication with said processing unit 101. The processing unit 101 may execute instructions and/or code stored in the memory 102. A variety of computer-readable storage media may be stored in and accessed from said memory 102. The memory 102 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 201 includes a denoising module 110 stored in the form of machine-readable instructions on any of said above-mentioned storage media and may be in communication to and executed by processor 101. When executed by the processor 101, the denoising module 110 causes the processor 101 to denoise one or more medical images. Method steps executed by the processor 101 to achieve the abovementioned functionality are elaborated upon in detail in FIG 2, 3, 6, 7 and 8.

The storage unit 103 may be a non-transitory storage medium which stores a medical database 107. The medical database 107 is a repository of medical images and associated medical data sets related to one or more patients that is maintained by a healthcare service provider. The medical database 107 may further include at least one pre-defined pixel matrix associated with at least one category of medical information, for correcting one or more noisy medical images. The input unit 104 may include input means such as keypad, touch-sensitive display, camera (such as a camera receiving gesture-based inputs), etc. capable of receiving input signal such as a medical image. The bus 105 acts as interconnect between the processor 101, the memory 102, the storage unit 103, the input unit 104, the output unit 106 and the network interface 108.

Those of ordinary skilled in the art will appreciate that said hardware depicted in FIG 1 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. Said depicted example is provided for the purpose of explanation only and is not meant to imply architectural limitations with respect to the present disclosure.

A data processing system 100 in accordance with an embodiment of the present disclosure includes an operating system employing a graphical user interface. Said operating system permits multiple display windows to be presented in the graphical user interface simultaneously with each display window providing an interface to a different application or to a different instance of the same application. A cursor in said graphical user interface may be manipulated by a user through a pointing device. The position of the cursor may be changed and/or an event such as clicking a mouse button, generated to actuate a desired response.

One of various commercial operating systems, such as a version of Microsoft Windows™, a product of Microsoft Corporation located in Redmond, Washington may be employed if suitably modified. Said operating system is modified or created in accordance with the present disclosure as described.

Disclosed embodiments provide systems and methods for processing medical images. In particular, the systems and methods may generate a denoised medical image.

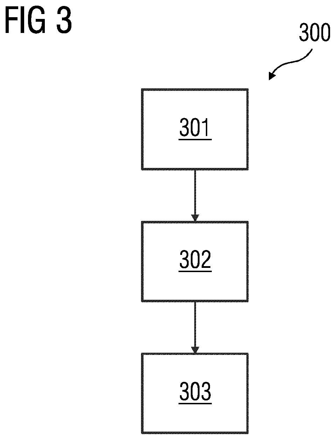

FIG 2 illustrates a flowchart of a method 200 of generating a denoised medical image, according to an embodiment of the present invention. The method 200 includes a step 201 of obtaining a medical image from a medical imaging device. The medical imaging device may include an X-ray imaging unit, a magnetic resonance imaging unit, a PET imaging unit, an ultrasound imaging unit, a computed tomography unit, or any other radiological imaging device. The medical image includes imaging information associated with a patient. The imaging information may include at least one of examined body part or organ associated with the patient. The medical image is further associated with at least one category of medical information. The medical information may include medical study description associated with the medical image, medical procedure performed on the patient and examined body part associated with the medical image. The method 200 further includes a step 202 of extracting the at least one category of medical information associated with the medical image. The at least one category of medical information enables effective classification of the medical image. The method 200 may further include a step 203 of processing the medical image using at least one machine learning model to obtain pixel information associated with the medical image. The pixel information may be one or more pixel intensity values associated with the medical image. Such pixel intensity values may be obtained from at least one portion of the medical image. The pixel information enables identification of presence of noise in the medical image. The method steps of processing the medical image is further elaborated in FIG 3. The method 200 further includes a step 204 of retrieving at least one pre-defined pixel matrix from the medical database 107. Such pre-defined pixel matrix is identified from the medical database 107 based on the at least one category of medical information and the pixel information associated with the medical image. In an embodiment, the medical database 107 may include a plurality of pre-defined pixel matrices which may be classified based on categories of medical information. Therefore, for a medical image associated with a given category of medical information, a pre-defined pixel matrix is retrieved from the medical database 107. The method further includes a step 205 of correcting the pixel information associated with the medical image using the at least one pre-defined matrix so as to generate a denoised medical image. The pixel intensity values associated with the pre-defined pixel matrix may be different in comparison to the pixel intensity values associated with the medical image. Therefore, the pixel intensity values associated with the pre-defined pixel matrix are applied to the medical image to correct the pixel information associated with the medical image. Advantageously, the invention enables removal of noise from the medical image thereby improving the clarity of the medical image. Therefore, the accuracy of medical diagnosis is improved. Furthermore, the need for frequent image acquisition is avoided.

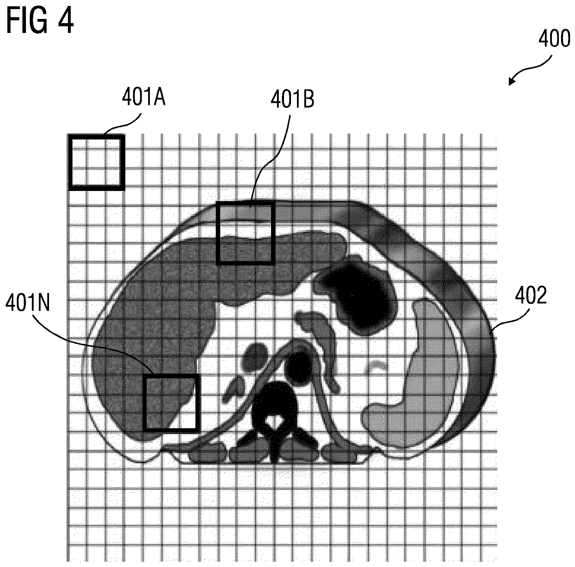

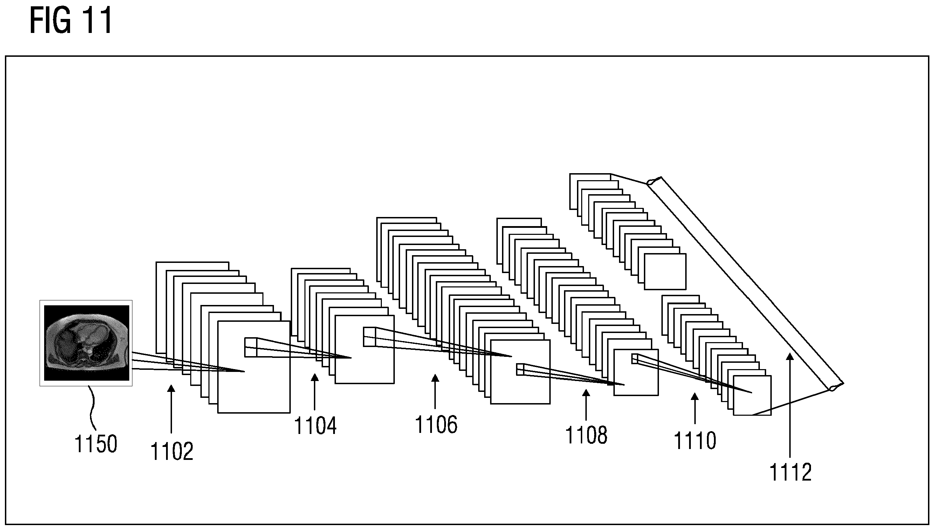

FIG 3 illustrates a flowchart of a method 300 of processing a medical image to obtain pixel information, according to an embodiment. The method 300 includes a step 301 of identifying the at least one portion of the medical image which comprises noise. The medical image may be divided into one or more portions of equal sizes and analyzed to identify presence of noise. The noise in the medical image may be present in the form of blur or one or more artefacts that may affect the clarity of the medical image. Such noise may be present in the entire medical image or in at least one portion of the medical image. On identifying the at least one portion of the medical image comprising noise, the method includes a step 302 of constructing at least one pixel matrix of the at least one portion of the medical image. The at least one pixel matrix includes equal number of rows and columns. In an embodiment, the rows and columns of the pixel matrix enable portioning the medical image into equal areas for further analysis. In an embodiment, the number of pixel matrices constructed may depend on the size of the at least one portion of the medical image which is to be further analyzed. The construction of the pixel matrices is illustrated in FIG 4. Referring to FIG 4, a medical image 400 is illustrated on which a plurality of pixel matrices 401A-N are constructed The pixel matrices 401A-N depict at least a portion of medical information 402 associated with the medical image 400. The pixel matrices 401A-N include equal number of rows and columns. In the embodiment, the pixel matrices 401A-N include three rows and three columns. The method 300 further includes a step 303 of determining one or more pixel intensity values for the at least one pixel matrix of the at least one portion of the medical image. The pixel information includes one or more pixel intensity values associated with the at least one portion of the medical image. The pixel intensity values are determined from each of the pixel forming a part of the at least one portion of the medical image. Advantageously, determination of pixel information enables effective identification of noise in the medical image. The pixel information is further used to denoise the medical image. The method steps of processing the medical image are performed by a machine learning model. The working of the machine learning model has been elaborated in further detail in FIG 11. Referring to FIG 11, an embodiment of processing one or more medical images using a machine learning model is described. The system 100 uses neural networks to identify and extract pixel information from the one or more medical images. In the present embodiment, convolutional neural networks are used to identify and extract the pixel information associated with the medical image. As shown in the figure, a medical image 1150 is taken. The convolutional neural network extracts relevant information from pixels of the medical image 1150 and inputs the same into a fully-connected neural network with an output layer 1112 yielding noise information associated with the at least one portion of the medical image. The convolutional neural network is trained on a set of example medical images which may include noise and which may not include noise. Data augmentation may be performed by applying blurring algorithms to normal medical image dataset to increase the size of the training set. In an embodiment, approximately 800 of the medical image dataset may be used for training of the machine learning model and approximately 200 of the medical image dataset may be used for evaluation of the machine learning model. The evaluation of the machine learning model may be performed to determine an accuracy rate of the machine learning model.

In particular, the medical image 1150 is represented as a two-dimensional array of pixel intensities for three array dimensions for feature maps including height and width. The medical image 1150 is transformed through convolutional feature extraction layers according to the following equation:

$$h_{l,ij}^{(k)} = \emptyset((W_l^{(k)} * h_{l-1})_{ij} + b_l^{(k)})$$

where *l* denotes the layer index, *k* denotes the feature map index, $h_0$ corresponds to the image pixel array,

$W_l^{(k)}$ and $b_l^{(k)}$ are the filters and biases, which correspond to the *l*-th layer and *k*-th feature map, learned from training examples, and Ø is an element wise activation function such as sigmoid(x) or max(0,x) (rectified linear unit, ReLU).

As shown in FIG 11, pooling layers 1104 and 1108 are used subsequent to convolutional layers 1102, 1106 and 1110. The pooling layers 1104 and 1108 aggregate spatially local regions using a max-function i.e. the maximum value of the spatial local region is selected. For example, spatially local regions of size 2x2 may be aggregated using the max-function, i.e. the maximum value of the 2x2 region is selected. Common aggregation functions are the maximum or average function, but other functions are possible. Spatial dropouts with a dropout rate of 0.3 are introduced between consecutive convolutions. In the present invention, the processing of medical image may consist of three convolution layers of kernel size 2x2 and one max pooling layer. Each convolution operation may be followed by batch normalization and ReLU. The output layer 1112 yields classification of the at least one portion of the medical image as noisy or non-noisy.

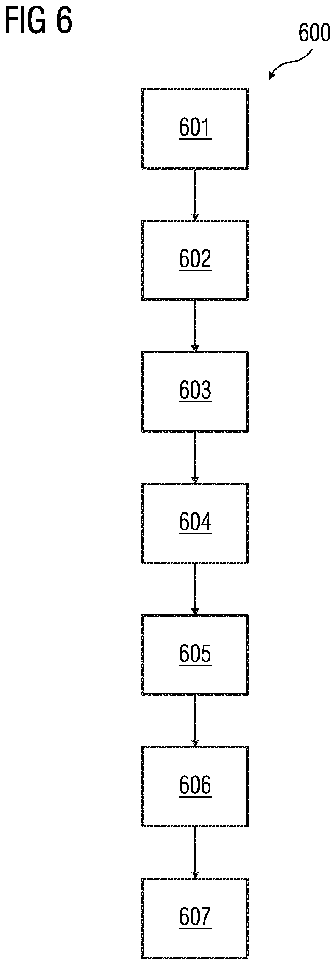

The method steps associated with training of the machine learning model is described further in FIG 6.

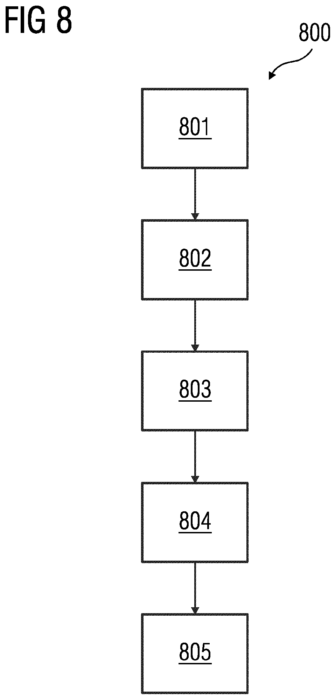

FIG 6 illustrates a flowchart of a method 600 of training at least one machine learning model to generate a denoised medical image. The method 600 includes a step 601 of receiving a reference medical image depicting a body part of a patient. In an embodiment, the reference medical image may be received from a source such as the medical database 107. Alternatively, the reference medical image may also be obtained from the medical image acquisition device. The reference medical image may be a medical image which may not include noise. The method 600 further includes a step of obtaining a noisy medical image corresponding to the reference medical image. Therefore, the noisy medical image may depict the same body part as that in the reference medical image. In an embodiment, the noise level of the noisy medical image may be higher than that of the reference medical image. At step 603, the machine learning model may be received by the processing unit from the memory. At step 604, one or more portions of the noisy medical image are identified using the machine learning model. The one or more portions of the noisy medical image may include noise. In an embodiment, the identification of one or more portions of the medical imaging comprising noise may be performed by analysis of pixel information associated with the noisy medical image. The method 600 further includes a step 604 of retrieving using the machine learning model at least one pre-defined pixel matrix from the database based on the one or more portions of the noisy medical image. At least one pre-defined pixel matrix is generated for each of the one or more portions of the medial image. The pre-defined pixel matrices may be classified based on the one or more medical information associated with the medical image. The method steps of generating/constructing the at least one pre-defined pixel matrix is elaborated in further detail in FIG 8. The pre-defined pixel matrix may include one or more pixel information associated with the one or more portions of the medical image. In an embodiment, the pre-defined pixel matrix may be used to remove noise from the noisy medical image. The method 600 further includes a step 605 of correcting the one or more portions of the noisy medical image by applying the at least one pre-defined pixel matrix to the noisy medical image. The machine learning model may be configured to apply the at least one pre-defined pixel matrix to the one or more portions of the noisy medical image to correct the one or more portions of the noisy medical image. The pixel intensity values of the pre-defined pixel matrix maybe applied to the one or more portions of the noisy medical image so as to correct the pixel intensity values associated with the one or more portions of the noisy medical image. On application of the pixel intensity values associated with the at least one pre-defined pixel matrix to the one or more portions of the noisy medical image, a denoised medical image is generated. The method 600 further includes a step 606 of adjusting the machine learning model based on a comparison of the denoised medical image with the reference medical image. In a further embodiment, the corrected or denoised medical image may be compared with the reference medical image. On comparison, one or more differences in the pixel intensity values between the reference medical image and the denoised medical image may be identified. If such differences are identified, the machine learning model may be adjusted such that the differences in the pixel intensity values may be overcome to generate a better denoised medical image. In an embodiment, the one or more differences in the pixel intensity values may indicate presence of noise in the denoised medical image. Therefore, the machine learning model may be further improved to overcome the differences in the pixel intensity values between the reference image and the denoised medical image. Advantageously, training of the machine learning model enables effective functioning of the machine learning model. Therefore, denoising of the medical images may be performed with greater accuracy.

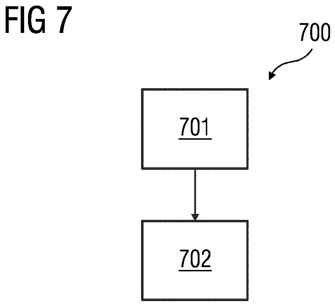

FIG 7 illustrates a flowchart of a method 700 of retrieving the at least one pre-defined pixel matrix from the database, according to an embodiment. At step 701, at least one category of medical information associated with the noisy medical image is extracted. The category of medical information may include, for example, medical study description associated with the medical image, examined body part associated with the medical image and medical procedure associated with the medical image. The medical information associated with the medical image enables efficient categorization of the medical images. At step 702, the at least one pre-defined pixel matrix is retrieved from the medical database 107 based on the at least one category of medical information associated with the noisy medical image. The pre-defined pixel matrix associated with the noisy medical image is accurately chosen based on the at least one category of medical information associated with the noisy medical image and the pre-defined pixel matrix. Therefore, errors in correcting the noisy medical image is avoided.

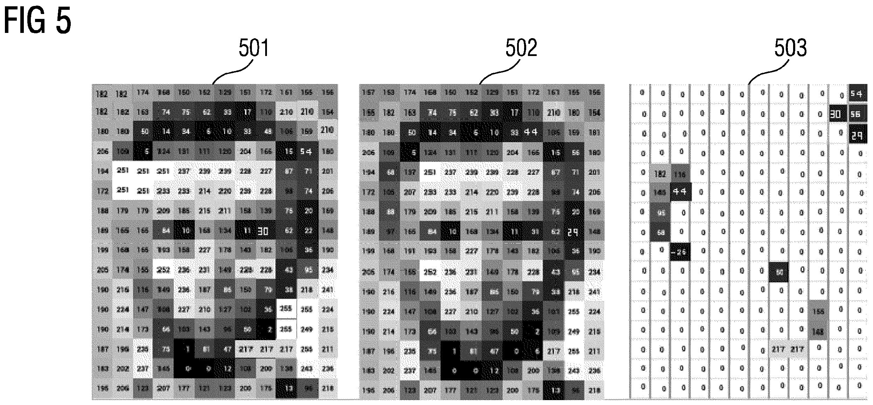

FIG 8 illustrates a flowchart of a method 800 of generating the pre-defined pixel matrix for a medical image. At step 801, at least one pixel matrix is constructed for the reference medical image and the noisy medical image. The pixel matrix includes equal number of rows and columns. The pixel matrix enables capture of pixel intensity values associated with the medical images. In the embodiment, the at least one pixel matrix of the reference medical image corresponds to the at least one pixel matrix of the noisy medical image. Therefore, the portion of the reference medical image chosen is similar to the portion of the noisy medical image which may require correction. The method 800 further includes a step 802 of determining one or more pixel intensity values for the at least one pixel matrix of the reference medical image and the at least one pixel matrix of the noisy medical image. The one or more pixel intensity values may correspond to one or more pixels that form a part of the at least one pixel matrix of the reference medical image and the noisy medical image. The pixel intensity values may enable determination of presence of noise in the noisy medical image. At step 803, a deviation between the at least pixel matrix associated with the reference medical image and the at least one pixel matrix of the noisy medical image is determined. The deviation may be identified based on a difference between the pixel intensity values of the at least one matrix of the reference medical image and the at least one pixel matrix of the noisy medical image. The determination of deviation in pixel intensities of the reference medical image and the noisy medical image is described in further detail in FIG 5. At step 804, at least one pre-defined pixel matrix is generated which includes one or more pixel intensity values obtained by subtracting the one or more pixel intensity values associated with the at least one pixel matrix of the reference medical image and the at least one noisy medical image. Therefore, the pre-defined pixel matrix includes pixel information required to correct the noisy medical image. The method 800 further includes a step 805 of archiving the at least one pre-defined pixel matrix in the database. In a further embodiment, the at least one pre-defined pixel matrix is mapped to the at least one category of medical information associated with the reference medical image and the noisy medical image. Therefore, advantageously, the at least one pre-defined pixel matrix maybe retrieved from the database using the category of medical information. Advantageously, the pre-defined pixel matrix enables accurate correction of the noisy medical image by applying the difference of the pixel intensity values between the reference medical image and the noisy medical image to the noisy medical image. Furthermore, the need for multiple medical scans is avoided.

FIG 5 illustrates pixel information associated with a set of medical images, according to an embodiment. Image set 501 depicts one or more pixel intensity values associated with a noisy medical image. Image set 502 depicts one or more pixel intensity values associated with a reference medical image. Image set 503 depicts the difference in the pixel intensity values associated with the reference medical image and the noisy medical image.

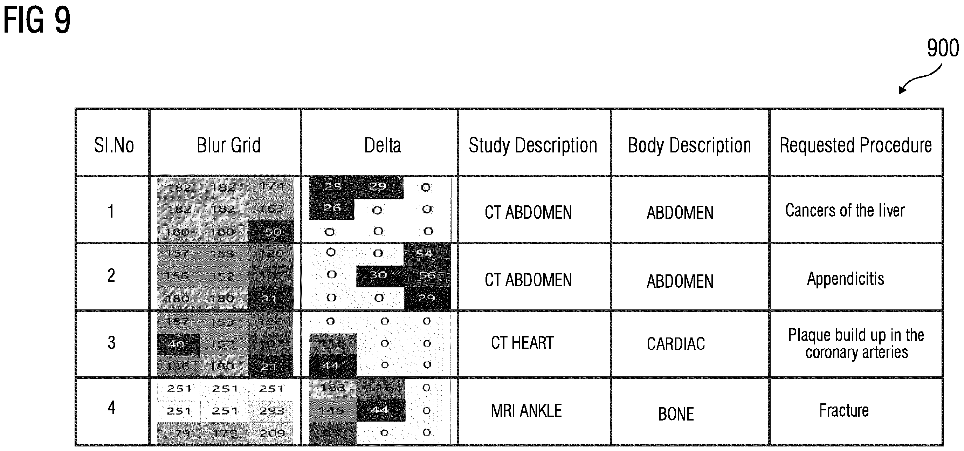

FIG 9 illustrates a table 900 depicting archived pre-defined pixel matrices associated with at least one category of medical information, according to the embodiment. The table 900 includes pixel information associated with a reference medical image (illustrated as 'Correct grid' in the figure), pixel information associated with noisy medical image (illustrated as 'Blur grid' in the figure) and categories of medical information associated with the reference medical image and the noisy medical image. For example, the category of medical information in the embodiment include medical study description, body part depicted in the medical image and medical procedure associated with the medical images. Advantageously, the pre-defined pixel matrix can be made available for various categories of medical information. Therefore, the pre-defined matrices may be easily applied to the noisy medical images to perform denoising.

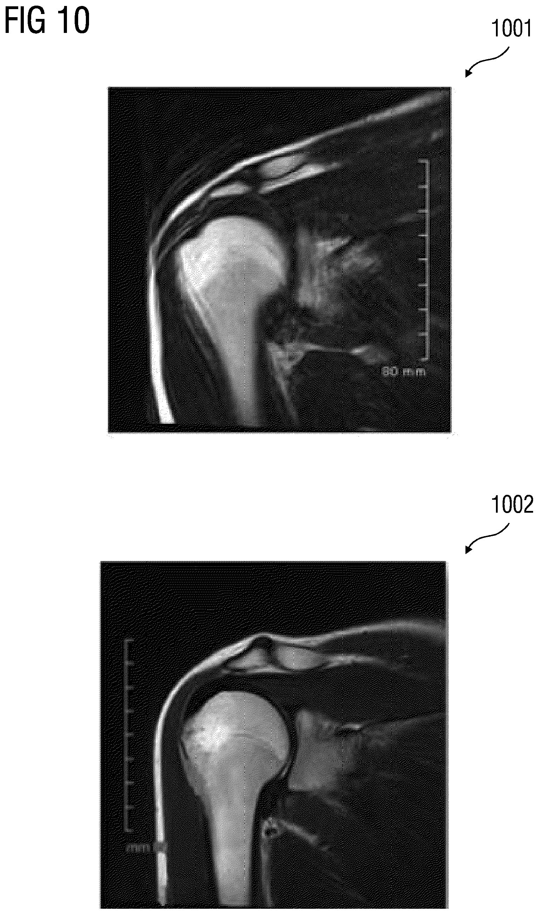

FIG 10 illustrates a set of medical images depicting a noisy medical image 1001 and a denoised medical image 1002. One or more portions of the medical image 1001 include noise thereby affecting the clarity of the medical image. The medical image 1002 is a denoised medical image generated on application of the pre-defined pixel matrix associated with the noisy medical image. The noise affecting the clarity of the medical image 1001 is eliminated in the medical image 1002.

The advantage of the invention is that requirement of the patient to undergo multiple medical scans is eliminated. Therefore, the noisy medical images may still be used for further analysis as they can be denoised using the invention. Furthermore, diagnosis of medical condition associated with the patient is faster as additional expenditure of time in repeated medical scan procedures is avoided. Yet another advantage of the invention is increase in the cost efficiency of the process of diagnosis.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. The invention is defined by the appended claims.

**Claims**

1. A computer implemented method (200) of generating a denoised medical image, the method (200) comprising:

receiving, by a processing unit (101), a medical image generated by a medical imaging device; extracting, by the processing unit (101), at least one category of medical information associated with the medical image; identifying, by the processing unit (101), pixel information associated with a noise in the medical image using at least one trained machine learning model; retrieving, by the processing unit (101), at least one pre-defined pixel matrix from a database (107), wherein the pre-defined pixel matrix is identified based on the at least one category of medical information and the pixel information associated with the pixels identified from the medical image; and correcting, by the processing unit (101), the pixel information associated with the identified pixels in the medical image using the at least one predefined pixel matrix so as to generate a denoised medical image, wherein the denoised medical image has improved clarity over the medical image, wherein identifying the pixel information associated with a noise in the medical image comprises:

identifying, by the processing unit (101), at least one portion of the medical image that comprises noise; and extracting, by the processing unit (101), the pixel information associated with the identified at least one portion of the medical image, wherein extracting the pixel information associated with the at least one portion of the medical image comprises: constructing, by the processing unit (101), at least one pixel matrix (401A-N) for each of the at least one portion of the medical image, and determining, by the processing unit (101), the pixel intensity values for the at least one pixel matrix (401AN) of each of the at least one portion of the medical image as the pixel information, wherein the at least one pixel matrix (401A-N) associated with the at least one portion of the medical image and the at least one pre-defined pixel matrices is composed of at least three rows and three columns, wherein correcting the pixel information associated with the medical image comprises applying, by the processing unit (101), the pre-defined pixel matrix to the at least one pixel matrix of the medical image, wherein the pre-defined pixel matrix is retrieved using the trained machine learning model from the database, wherein the pixel intensity values of the pre-defined pixel matrix depict pixel value differences between a portion of a reference noisy medical image and a corresponding portion of a non-noisy medical image, wherein the method of generating a denoised medical image further comprises receiving, by a processing unit (101), a reference medical image depicting a body part of a patient; obtaining, by the processing unit (101), a noisy medical image corresponding to the reference medical image, the noisy medical image depicting the body part of the patient and having a noise level higher than the reference medical image; constructing, by the processing unit (101), at least one pixel matrix of the reference medical image and the noisy medical image, wherein the at least one pixel matrix (401A-N) comprises equal number of rows and columns, wherein the at least one pixel matrix of the reference image corresponds to the at least one pixel matrix of the noisy medical image; determining, by the processing unit (101), one or more pixel intensity values for the at least one pixel matrix of the reference medical image and the at least one pixel matrix of the noisy medical image; identifying, by the processing unit (101), a deviation between the at least one pixel matrix associated with the reference medical image and the at least one pixel matrix of the noisy medical image; generating, by the processing unit (101), the at least one pre-defined pixel matrix, wherein the pre-defined pixel matrix comprises one or more pixel intensity values obtained by subtracting the one or more pixel intensity values associated with the at least one pixel matrix of the reference medical image and the at least one noisy medical image; and

archiving, by the processing unit (101), the at least one pre-defined pixel matrix in the database.

2. The method (200) according to claim 1, wherein the at least one category of medical information associated with the medical image comprises at least one of medical study description associated with the medical image, examined body part associated with the medical image, and medical procedure associated with the medical image.

3. The method (200) according to any of the aforementioned claims, wherein the at least one pre-defined pixel matrix is generated by the at least one trained machine learning model for each category of medical information, wherein the predefined pixel matrix is retrieved using the trained machine learning model from the database.

4. The method (200) according to any of the aforementioned claims, wherein the at least one trained machine learning model is a convolutional neural network model.

5. A medical imaging device for generating a denoised medical image, the device comprising:

one or more processing units (101); a scanner unit configured to capture one or more medical images; and a memory (102) coupled to the one or more processing units (101), the memory (102) comprising a denoising module (110) configured to perform the method steps as claimed in any one of claims 1 to 4 using at least one trained machine learning model.

6. A system (100) for generating a denoised medical image, the system (100) comprising:

one or more processing units (101); a medical database (107) coupled to the one or more processing units (101), wherein the medical database (107) is configured to receive the plurality of medical images from a medical imaging device; a memory (102) coupled to the one or more processing units (101), the memory (102) comprising a denoising module (110) configured to perform the method steps as claimed in any one of claims 1 to 4 using at least one trained machine learning model.

7. A computer program product comprising machine readable instructions, that when executed by a processing unit (101), cause the processing unit (101) to perform a method according to any one of claims 1 to 4.

8. A computer readable medium on which program code sections of a computer program are saved, the program code sections being loadable into and/or executable in a system (100) to make the system (100) execute the method of any one of the claims 1 to 4 when the program code sections are executed in the system (100).

**Patentansprüche**

1. Computerimplementiertes Verfahren (200) zur Erzeugung eines entrauschten medizinischen Bildes, wobei das Verfahren (200) umfasst:

Empfangen eines medizinischen Bildes, das von einer medizinischen Bildgebungsvorrichtung erzeugt wird, durch eine Verarbeitungseinheit (101); Extrahieren mindestens einer Kategorie von medizinischen Informationen, die mit dem medizinischen Bild assoziiert ist, durch die Verarbeitungseinheit (101); Identifizieren von Pixelinformationen, die mit einem Rauschen im medizinischen Bild assoziiert sind, durch die Verarbeitungseinheit (101) unter Verwendung mindestens eines trainierten Modells für maschinelles Lernen; Abrufen mindestens einer vordefinierten Pixelmatrix durch die Verarbeitungseinheit (101) aus einer Datenbank (107), wobei die vordefinierte Pixelmatrix basierend auf der mindestens einen Kategorie von medizinischen Informationen und den Pixelinformationen identifiziert wird, die mit den aus dem medizinischen Bild identifizierten Pixeln assoziiert sind; und Korrigieren der Pixelinformationen, die mit den identifizierten Pixeln im medizinischen Bild assoziiert sind, durch die Verarbeitungseinheit (101) unter Verwendung der mindestens einen vordefinierten Pixelmatrix, um ein entrauschtes medizinisches Bild zu erzeugen, wobei das entrauschte medizinische Bild eine verbesserte Klarheit gegenüber dem medizinischen Bild aufweist, wobei das Identifizieren der mit einem Rauschen im medizinischen Bild assoziierten Pixelinformationen umfasst:

Identifizieren mindestens eines Abschnitts des medizinischen Bildes, der Rauschen umfasst, durch die Verarbeitungseinheit (101) und Extrahieren der Pixelinformationen, die mit dem identifizierten mindestens einen Abschnitt des medizinischen Bildes assoziiert sind, durch die Verarbeitungseinheit (101), wobei das Extrahieren der mit dem mindestens einen Abschnitt des medizinischen Bildes assoziierten Pixelinformationen umfasst:

Erstellen mindestens einer Pixelmatrix (401A-N) durch die Verarbeitungseinheit (101) für jeden des mindestens einen Abschnitts des medizinischen Bildes und

Bestimmen der Pixelintensitätswerte für die mindestens eine Pixelmatrix (401A-N) jedes des mindestens einen Abschnitts des medizinischen Bildes durch die Verarbeitungseinheit (101)als die Pixelinformationen,

wobei die mindestens eine Pixelmatrix (401A-N), die mit dem mindestens einen Abschnitt des medizinischen Bildes und der mindestens einen vordefinierten Pixelmatrix assoziiert ist, aus mindestens drei Zeilen und drei Spalten besteht,

wobei das Korrigieren der mit dem medizinischen Bild assoziierten Pixelinformationen ein Anwenden der vordefinierten Pixelmatrix durch die Verarbeitungseinheit (101) auf die mindestens eine Pixelmatrix des medizinischen Bildes umfasst, wobei die vordefinierte Pixelmatrix unter Verwendung des trainierten Modells für maschinelles Lernen aus der Datenbank abgerufen wird, wobei die Pixelintensitätswerte der vordefinierten Pixelmatrix Pixelwertdifferenzen zwischen einem Abschnitt eines rauschbehafteten medizinischen Referenzbildes und einem entsprechenden Abschnitt eines nicht rauschbehafteten medizinischen Bildes darstellen,

wobei das Verfahren zur Erzeugung eines entrauschten medizinischen Bildes ferner umfasst:

Empfangen eines medizinischen Referenzbildes, das einen Körperteil eines Patienten darstellt, durch eine Verarbeitungseinheit (101);
Erhalten eines rauschbehafteten medizinischen Bildes, das dem medizinischen Referenzbild entspricht, durch die Verarbeitungseinheit (101), wobei das rauschbehaftete medizinische Bild den Körperteil des Patienten darstellt und einen höheren Rauschpegel als das medizinische Referenzbild aufweist;
Erstellen mindestens einer Pixelmatrix des medizinischen Referenzbildes und des rauchbehafteten medizinischen Bildes durch die Verarbeitungseinheit (101), wobei die mindestens eine Pixelmatrix (401A-N) eine gleiche Anzahl von Zeilen und Spalten aufweist, wobei die mindestens eine Pixelmatrix des Referenzbildes der mindestens einen Pixelmatrix des rauschbehafteten medizinischen Bildes entspricht;
Bestimmen eines oder mehrerer Pixelintensitätswerte durch die Verarbeitungseinheit (101) für die mindestens eine Pixelmatrix des medizinischen Referenzbildes und die mindestens eine Pixelmatrix des rauschbehafteten medizinischen Bildes;
Identifizieren einer Abweichung zwischen der mindestens einen Pixelmatrix, die mit dem medizinischen Referenzbild assoziiert ist, und der mindestens einen Pixelmatrix des rauschbehafteten medizinischen Bildes durch die Verarbeitungseinheit (101);
Erzeugen der mindestens einen vordefinierten Pixelmatrix durch die Verarbeitungseinheit (101), wobei die vordefinierte Pixelmatrix einen oder mehrere Pixelintensitätswerte umfasst, die durch Subtrahieren des einen oder der mehreren Pixelintensitätswerte erhalten werden, die mit der mindestens einen Pixelmatrix des medizinischen Referenzbildes und des mindestens einen rauschbehafteten medizinischen Bildes assoziiert sind; und
Archivieren der mindestens einen vordefinierten Pixelmatrix durch die Verarbeitungseinheit (101) in der Datenbank.

2. Verfahren (200) nach Anspruch 1, wobei die mindestens eine Kategorie von medizinischen Informationen, die mit dem medizinischen Bild assoziiert ist, mindestens eines von einer mit dem medizinischen Bild assoziierten Beschreibung einer medizinischen Untersuchung, einem mit dem medizinischen Bild assoziierten untersuchten Körperteil und einem mit dem medizinischen Bild assoziierten medizinischen Eingriff umfasst.

3. Verfahren (200) nach einem der vorhergehenden Ansprüche, wobei die mindestens eine vordefinierte Pixelmatrix durch das mindestens eine trainierte Modell für maschinelles Lernen für jede Kategorie von medizinischen Informationen erzeugt wird, wobei die vordefinierte Pixelmatrix unter Verwendung des trainierten Modells für maschinelles Lernen aus der Datenbank abgerufen wird.

4. Verfahren (200) nach einem der vorhergehenden Ansprüche, wobei das mindestens eine trainiertes Modell für maschinelles Lernen ein Modell eines neuronalen Faltungsnetzwerk ist.

5. Medizinische Bildgebungsvorrichtung zum Erzeugen eines entrauschten medizinischen Bildes, wobei die Vorrichtung umfasst:

eine oder mehrere Verarbeitungseinheiten (101); und
eine Scannereinheit, die zum Aufnehmen eines oder mehrerer medizinischer Bildes ausgelegt ist;
einen Speicher (102), der mit der einen oder den mehreren Verarbeitungseinheiten (101) gekoppelt ist, wobei der Speicher (102) ein Entrauschungsmodul (110) umfasst, das so ausgelegt ist, dass es die Verfahrensschritte nach einem der Ansprüche 1 bis 4 unter Verwendung mindestens eines trainierten Modells für maschinelles Lernen ausführt.

6. System (100) zum Erzeugen eines entrauschten medizinischen Bildes, wobei das System (100) umfasst:

eine oder mehrere Verarbeitungseinheiten (101); und
eine medizinische Datenbank (107), die mit der einen oder den mehreren Verarbeitungseinheiten (101) gekoppelt ist, wobei die medizinische Datenbank (107) zum Empfangen der Mehrzahl von medizinischen Bildern von einer medizinischen Bildgebungsvorrichtung ausgelegt ist;
einen Speicher (102), der mit der einen oder den mehreren Verarbeitungseinheiten (101) gekoppelt ist, wobei der Speicher (102) ein Entrauschungsmodul (110) umfasst, das so ausgelegt ist, dass es die Verfahrensschritte nach einem der Ansprüche 1 bis 4 unter Verwendung des mindestens einen trainierten Modells für maschinelles Lernen ausführt.

7. Computerprogrammprodukt, umfassend maschinenlesbare Anweisungen, die bei Ausführung durch eine Verarbeitungseinheit (101) die Verarbeitungseinheit (101) zum Durchführen eines Verfahrens nach einem der Ansprüche 1 bis 4 veranlassen.

8. Computerlesbares Medium, auf dem Programmcodeabschnitte eines Computerprogramms gespeichert sind, wobei die Programmcodeabschnitte in ein System (100) geladen und/oder von diesem ausgeführt werden können, um das System (100) zum Ausführen des Verfahrens nach einem der Ansprüche 1 bis 4 zu veranlassen, wenn die Programmcodeabschnitte im System (100) ausgeführt werden.

**Revendications**

1. Procédé (200) mis en oeuvre par ordinateur pour générer une image médicale débruitée, le procédé (200) comprenant les étapes suivantes :

recevoir, par une unité de traitement (101), une image médicale générée par un dispositif d'imagerie médicale ;
extraire, par l'unité de traitement (101), au moins une catégorie d'informations médicales associées à l'image médicale ;
identifier, par l'unité de traitement (101), les informations de pixels associées à un bruit dans l'image médicale à l'aide d'au moins un modèle d'apprentissage automatique entraîné ;
récupérer, par l'unité de traitement (101), au moins une matrice de pixels prédéfinie dans une base de données (107), la matrice de pixels prédéfinie étant identifiée sur la base d'au moins une catégorie d'informations médicales et des informations de pixels associées aux pixels identifiés dans l'image médicale ; et
corriger, par l'unité de traitement (101), les informations de pixels associées aux pixels identifiés dans l'image médicale à l'aide d'au moins une matrice de pixels prédéfinie de manière à générer une image médicale débruitée, l'image médicale débruitée présentant une clarté améliorée par rapport à l'image médicale
dans lequel l'identification des informations de pixels associées à un bruit dans l'image médicale comprend :

l'identification, par l'unité de traitement (101), d'au moins une partie de l'image médicale qui comprend du bruit ; et
l'extraction, par l'unité de traitement (101), des informations de pixels associées à l'au moins une partie identifiée de l'image médicale,
dans lequel l'extraction des informations de pixels associées à l'au moins une partie de l'image médicale comprend :

la construction, par l'unité de traitement (101), d'au moins une matrice de pixels (401A-N) pour chacune de l'au moins une partie de l'image médicale, et la détermination, par l'unité de traitement (101), des valeurs d'intensités de pixels pour l'au moins une matrice de pixels (401A-N) de chacune de l'au moins une partie de l'image médicale en tant qu'informations de pixels,

dans lequel l'au moins une matrice de pixels (401A-N) associée à l'au moins une partie de l'image médicale et à l'au moins une matrice de pixels prédéfinie est composée d'au moins trois lignes et trois colonnes,

dans lequel la correction des informations de pixels associées à l'image médicale comprend d'appliquer, par l'unité de traitement (101), la matrice de pixels prédéfinie à l'au moins une matrice de pixels de l'image médicale, la matrice de pixels prédéfinie étant extraite de la base de données à l'aide du modèle d'apprentissage automatique entraîné, dans lequel les valeurs d'intensités de pixels de la matrice de pixels prédéfinie représentent les différences de valeurs de pixels entre une partie d'une image médicale bruitée de référence et une partie correspondante d'une image médicale non bruitée,

dans lequel le procédé de génération d'une image médicale débruitée comprend en outre :

la réception, par une unité de traitement (101), d'une image médicale de référence représentant une partie du corps d'un patient ;
l'obtention, par l'unité de traitement (101), d'une image médicale bruitée correspondant à l'image médicale de référence, l'image médicale bruitée représentant la partie du corps du patient et présentant un niveau de bruit supérieur à celui de l'image médicale de référence ;
la construction, par l'unité de traitement (101), d'au moins une matrice de pixels de l'image médicale de référence et de l'image médicale bruitée, l'au moins une matrice de pixels (401A-N) comprenant un nombre égal de lignes et de colonnes, l'au moins une matrice de pixels de l'image de référence correspondant à l'au moins une matrice de pixels de l'image médicale bruitée ;
la détermination, par l'unité de traitement (101), d'une ou plusieurs valeurs d'intensités de pixels pour l'au moins une matrice de pixels de l'image médicale de référence et l'au moins une matrice de pixels de l'image médicale bruitée ;
l'identification, par l'unité de traitement (101), d'un écart entre l'au moins une matrice de pixels associée à l'image médicale de référence et l'au moins une matrice de pixels de l'image médicale bruitée ;
la génération, par l'unité de traitement (101), de l'au moins une matrice de pixels prédéfinie, la matrice de pixels prédéfinie comprenant une ou plusieurs valeurs d'intensités de pixels obtenues par soustraction des une ou plusieurs valeurs d'intensités de pixels associées à l'au moins une matrice de pixels de l'image médicale de référence et à l'au moins une image médicale bruitée ; et
l'archivage, par l'unité de traitement (101), de l'au moins une matrice de pixels prédéfinie dans la base de données.

2. Procédé (200) selon la revendication 1, dans lequel l'au moins une catégorie d'informations médicales associée à l'image médicale comprend au moins l'une parmi une description d'étude médicale associée à l'image médicale, une partie de corps examinée associée à l'image médicale, et une procédure médicale associée à l'image médicale.

3. Procédé (200) selon l'une quelconque des revendications précédentes, dans lequel l'au moins une matrice de pixels prédéfinie est générée par l'au moins un modèle d'apprentissage automatique entraîné pour chaque catégorie d'informations médicales, la matrice de pixels prédéfinie étant récupérée dans la base de données à l'aide du modèle d'apprentissage automatique entraîné.

4. Procédé (200) selon l'une quelconque des revendications précédentes, dans lequel l'au moins un modèle d'apprentissage automatique entraîné est un modèle de réseau neuronal convolutif.

**5.** Dispositif d'imagerie médicale pour générer une image médicale débruitée, le dispositif comprenant :

une ou plusieurs unités (101) de traitement ;
une unité de scanner configurée pour capturer une ou plusieurs images médicales ; et
une mémoire (102) couplée aux une ou plusieurs unités de traitement (101), la mémoire (102) comprenant un module de débruitage (110) configuré pour exécuter les étapes de procédé telles que revendiquées dans l'une quelconque des revendications 1 à 4 à l'aide d'au moins un modèle d'apprentissage automatique entraîné.

**6.** Système (100) pour générer une image médicale débruitée, le système (100) comprenant :

une ou plusieurs unités (101) de traitement ;
une base de données médicales (107) couplée aux une ou plusieurs unités de traitement (101), la base de données médicales (107) étant configurée pour recevoir la pluralité d'images médicales d'un dispositif d'imagerie médicale ;
une mémoire (102) couplée aux une ou plusieurs unités de traitement (101), la mémoire (102) comprenant un module de débruitage (110) configuré pour exécuter les étapes de procédé telles que revendiquées dans l'une quelconque des revendications 1 à 4 à l'aide d'au moins un modèle d'apprentissage automatique entraîné.

**7.** Produit programme d'ordinateur comprenant des instructions lisibles par machine qui, lorsqu'elles sont exécutées par une unité de traitement (101), amènent l'unité de traitement (101) à exécuter un procédé selon l'une quelconque des revendications 1 à 4.

**8.** Support lisible par ordinateur sur lequel des sections de code de programme d'un programme d'ordinateur sont enregistrées, les sections de code de programme pouvant être étant chargées et/ou exécutées dans un système (100) pour amener le système (100) à exécuter le procédé de l'une quelconque des revendications 1 à 4 lorsque les sections de code de programme sont exécutées dans le système (100).

# FIG 1

## FIG 2

EP 3 889 881 B1

FIG 3

300

301

302

303

15

# FIG 4

400

401A  401B

401N

402

FIG 5

FIG 6

FIG 7

700

701

702

FIG 8

800

801

802

803

804

805

# FIG 9

900

EP 3 889 881 B1

| SI.No | Blur Grid | | | Delta | | | Study Description | Body Description | Requested Procedure |
|---|---|---|---|---|---|---|---|---|---|
| 1 | 182 | 182 | 174 | 25 | 29 | 0 | CT ABDOMEN | ABDOMEN | Cancers of the liver |
|   | 182 | 182 | 163 | 26 | 0 | 0 |   |   |   |
|   | 180 | 180 | 50 | 0 | 0 | 0 |   |   |   |
| 2 | 157 | 153 | 120 | 0 | 0 | 54 | CT ABDOMEN | ABDOMEN | Appendicitis |
|   | 156 | 152 | 107 | 0 | 30 | 56 |   |   |   |
|   | 180 | 180 | 21 | 0 | 0 | 29 |   |   |   |
| 3 | 157 | 153 | 120 | 0 | 0 | 0 | CT HEART | CARDIAC | Plaque build up in the coronary arteries |
|   | 40 | 152 | 107 | 116 | 0 | 0 |   |   |   |
|   | 136 | 180 | 21 | 44 | 0 | 0 |   |   |   |
| 4 | 251 | 251 | 251 | 183 | 116 | 0 | MRI ANKLE | BONE | Fracture |
|   | 251 | 251 | 293 | 145 | 44 | 0 |   |   |   |
|   | 179 | 179 | 209 | 95 | 0 | 0 |   |   |   |

## FIG 10

1001

1002

EP 3 889 881 B1

FIG 11

1150 1102 1104 1106 1108 1110 1112

**EP 3 889 881 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017191643 A1

- US 2019377978 A1